# EUROPÄISCHE PATENTSCHRIFT

(11) **EP 2 786 024 B1**
(45) Veröffentlichungstag und Bekanntmachung des Hinweises auf die Patenterteilung: **07.10.2015**
(21) Anmeldenummer: 12790419.1
(22) Anmeldetag: 09.11.2012
(51) Int. Cl.: B60K 6/12, F15B 1/02, F15B 11/024, F15B 13/02, F15B 21/14, F15B 1/24

(54) **HYDRAULISCHES HYBRIDSYSTEM FÜR ROTATORISCHE ANWENDUNGEN**
HYDRAULIC HYBRID SYSTEM FOR ROTATORY APPLICATIONS
SYSTÈME HYBRIDE HYDRAULIQUE DESTINÉ À DES APPLICATIONS DE ROTATION

(30) Priorität: 03.12.2011 DE 102011120227
(43) Veröffentlichungstag der Anmeldung: 08.10.2014
(73) Patentinhaber: Hydac Fluidtechnik GmbH, 66280 Sulzbach/Saar (DE)
(72) Erfinder: SCHULZ, Frank, 66440 Blieskastel-Bierbach (DE); BRUCK, Peter, 66484 Althornbach (DE)
(74) Vertreter: Bartels, Martin Erich Arthur
(86) Internationale Anmeldenummer: PCT/EP2012/004655
(87) Internationale Veröffentlichungsnummer: WO 2013/079152

(56) Entgegenhaltungen:
- DE-A1- 4 212 542
- US-A- 5 971 027
- US-A- 6 145 311

## Beschreibung

Die Erfindung betrifft ein hydraulisches Hybridsystem für rotatorische Anwendungen mit den Merkmalen im Oberbegriff von Anspruch 1.

Angesichts der zunehmenden Verknappung von Ressourcen und den damit zusammenhängenden verstärkten Bemühungen, Energie einzusparen, gewinnen Hybridsysteme der vorstehenden Art zunehmend an Bedeutung. Bei derartigen Systemen ist zwischen einem Antriebsmotor, beispielsweise in Form eines Verbrennungsmotors oder Elektromotors, und einem rotatorisch arbeitenden Gerät, etwa einem Fahrantrieb, eine Motor-Pumpeneinheit, angeordnet, die in dem System in einem halb geschlossenen Hydraulikkreis betrieben wird, um in Zusammenwirkung mit einem als Energiespeicher dienenden Hydrospeicher ein eine Energieeinsparung ermöglichendes Hybridsystem zu bilden. In der bei solchen Hybridsystemen üblichen Weise wird bei Betriebszuständen, bei denen der Aktuator gegenüber dem Primärantrieb in Form des Verbrennungsmotors oder Elektromotors einen Leistungsüberschuss zur Verfügung stellen kann, beispielsweise bei Bremsvorgängen eines Fahrantriebes (rekuperative Bremse), der Hydrospeicher zur Energiespeicherung mittels der Motor-Pumpeneinheit geladen. Bei Betriebszuständen, bei denen am Aktuator eine Mehrleistung erforderlich ist, beispielsweise für Beschleunigungsvorgänge eines Fahrantriebes, wird im Hydrospeicher gespeicherte Energie in einem Entladevorgang an das System für eine Leistungsspitze zurückgegeben.

Bei den dem Stand der Technik entsprechenden Hybridsystemen dieser Art lässt die Effizienz der Energieumsetzung zu wünschen übrig. Eine Ursache hierfür ist die Abhängigkeit der Lade- und Entladeprozesse des Hydrospeichers vom jeweiligen Systemdruck. Genauer gesagt, kann der Hydrospeicher immer nur dann aufgeladen werden, wenn der Systemdruck höher als der im Speicher auf der Gasseite befindliche Gasdruck ist. Wenn dieser Systemdruck in der jeweiligen Betriebssituation des Geräts, etwa Fahrantriebes, nicht aufgebaut werden kann, besteht keine Möglichkeit, Energie im Speicher aufzunehmen. Auch der Entladeprozess des Speichers ist der Einschränkung unterzogen, dass immer nur dann Energie aus dem Speicher zurück in das System gespeist werden kann, wenn der Speicherdruck noch größer als der aktuelle Systemdruck ist. Zusätzlich besteht das Problem, dass bei einem Speicherdruck, der größer ist als der aktuell benötigte Systemdruck, die Druckniveaus von Speicher und System durch Ventile ausgeglichen werden müssen. Somit geht die Energie, die in dem Differenzdruck zwischen Speicherdruck und Systemdruck steckt, durch Drosselverluste verloren. Der Versuch, diese Probleme abzumildern, indem bei der Motor-Pumpeneinheit eine Verstellpumpe eingesetzt wird, führt zum einen zu keinem ausreichend guten Betriebsverhalten und des Weiteren zu einem beträchtlichen Kostenaufwand für die teure Verstellpumpe.

Durch die DE 601 18 987 T2 ist ein Hydraulikenergiespeichersystem im Stand der Technik bekannt. Die Fluidausgänge einer Pumpen-Motor-Einheit sind mit einer Hochdruckkammer und einer Niederdruckkammer eines Doppelkolbenspeichers gekoppelt, wobei die Kolben in den einzelnen Kammern des Doppelkolbenspeichers über eine Kolbenstange miteinander verbunden sind. Das bekannte Energie-Speichersystem dient insbesondere für den Einsatz in Fahrzeugen, um Energie wirksam bei hohen Leistungsniveaus zu speichern und wieder abgeben zu können. Was eine günstige Energieumsetzung anbelangt, lässt die bekannte Lösung jedoch noch Wünsche offen.

Die US 5 971 027 A beschreibt ein hydraulisches Hybridsystem für Kraftwagenantriebe und dergleichen, mit einem Aktuator in Form einer Motor-Pumpeneinheit, die mit einer Verbrennungskraftmaschine, vorzugsweise in der Art eines Fahrmotors des Kraftfahrzeugs, gekuppelt ist und bei einem Betriebszustand des Hybridsystems als Verbraucher hydraulischer Energie arbeitet und in einem anderen Betriebszustand des Systems als Erzeuger hydraulischer Energie arbeitet, und mit einem Hydrospeicher, der bei einem Betriebszustand von der Motor-Pumpeneinheit zur Energiespeicherung aufladbar und beim anderen Betriebszustand für eine Energieabgabe an die Motor-Pumpeneinheit entladbar ist und wobei mindestens ein Hydrospeicher in Form eines verstellbaren hydropneumatischen Kolbenspeichers vorgesehen ist, in dem mehrere Druckräume, die an unterschiedlich große Wirkflächen an der Fluidseite des Speicherkolbens angrenzen, gebildet sind, und wobei eine Stellanordnung aus Ventilen und fluidischen Verbindungen vorgesehen ist, die einen ausgewählten Druckraum oder mehrere ausgewählte Druckräume des Kolbenspeichers mit dem Aktuator verbindet.

Im Hinblick auf diesen Stand der Technik stellt sich die Erfindung die Aufgabe, ein Hybridsystem der betrachteten Art zur Verfügung zu stellen, das eine günstigere Energieumsetzung gegenüber den bekannten Lösungen ermöglicht.

Erfindungsgemäß ist diese Aufgabe durch ein Hybridsystem, das die Merkmale des Patentanspruchs 1 in seiner Gesamtheit aufweist, gelöst.

Demgemäß besteht eine wesentliche Besonderheit der Erfindung darin, dass eine Stellanordnung vorgesehen ist, die in Abhängigkeit von dem jeweiligen auf der Gasseite des Kolbenspeichers und am Aktuator herrschenden Druckniveau einen ausgewählten Druckraum oder mehrere ausgewählte Druckräume des Kolbenspeichers mit dem Aktuator verbindet, und dass der Stellanordnung eine Steuerlogik zugeordnet ist, die für die Ansteuerung von der Stellanordnung zugehörigen Ventilen die Signale von Sensoreinrichtungen verarbeitet, die das Druckniveau auf der Gasseite des Kolbenspeichers und den jeweiligen Betriebszustand des Aktuators darstellen. Dadurch ergibt sich die Möglichkeit, Energie unabhängig vom Vorfülldruck auf der Gasseite des Speichers und unabhängig vom jeweiligen, dem aktuellen Betriebszustand des Aktuators entsprechenden Systemdruck zu recyceln, weil durch Auswählen einer Wirkfläche passender Größe das jeweilig gewünschte Druckniveau am Speicher für Ladung oder Entladung genutzt werden kann. Dadurch ist bei sämtlichen Betriebszuständen eine optimale Energieumsetzung möglich.

Dabei steuert die Logik die Energietransformation, indem entsprechend dem Systemdruck, d.h. dem Betriebszustand des Aktuators, und dem Ladezustand am Speicher entschieden wird, wie dieser geladen oder entladen wird. Dabei besteht die Möglichkeit, dass der Anwender durch eigene Vorgaben die Logik beeinflussen und damit die Arbeitscharakteristik des Hybridsystems bestimmen kann.

Hinsichtlich der Bauweise des Kolbenspeichers kann die Anordnung mit Vorteil so getroffen sein, dass der Speicherkolben zur Bildung unterschiedlich großer Wirkflächen als Stufenkolben gestaltet ist und an seiner Fluidseite an Zylinderflächen angrenzende Kolbenteilflächen aufweist, wobei das Speichergehäuse korrespondierende, an Zylinderflächen angrenzende Gegenflächen aufweist, die zusammen mit ihnen zugeordneten Kolbenteilflächen jeweils gesonderte Druckräume begrenzen.

Vorzugsweise sind Wirkflächen am Speicherkolben und Gegenflächen am Speichergehäuse in im axialen Abstand voneinander befindlichen Stufen angeordnet, und die Wirkflächen und Gegenflächen können in Form von Ringflächen oder Kreisflächen vorgesehen sein, die konzentrisch zur Längsachse angeordnet sind.

Hinsichtlich der Ansteuerung der Druckräume des Kolbenspeichers kann die Anordnung mit Vorteil so getroffen sein, dass die Stellanordnung Schaltventile aufweist, über die jeweilige Druckräume des Kolbenspeichers, die für Ladung oder Entladung ausgewählt sind, mit dem Aktuator und die übrigen Druckräume mit dem Tank verbindbar sind. Durch die Steuerlogik gesteuert, sind so ein ausgewählter Druckraum oder eine Kombination ausgewählter Druckräume für Ladung oder Entladung mit dem Aktuator verbindbar, während nicht ausgewählte Druckräume während der Entladung zum Tank hin drucklos entleerbar sind und während der Ladung aktiver Druckräume aus dem Tank nachfüllbar sind. Durch die Auswahl der aktivierten Druckräume besteht so die Möglichkeit, den Speicher genau mit dem aktuell zur Verfügung stehenden Systemdruck effizient zu laden. Auch kleine Drücke reichen aus. Bei Entladung des Speichers wird die Flächenkombination gewählt, die den Gasdruck in einen Hydraulikdruck wandelt, der nur knapp über dem benötigten Systemdruck liegt und somit eine extrem effiziente Entladung des Speichers ermöglicht.

Bei den Schaltventilen für die Ansteuerung der Druckräume des Speichers kann es sich um digitale Schnellschaltventile handeln. Bei Änderungen des Speicherdruckes oder des Systemdruckes kann während Ladevorgängen oder Entladevorgängen die Flächenkombination gewechselt werden.

Die Sensoreinrichtungen, die die von der Steuerlogik zu verarbeitenden Signale liefern, können Drucksensoren, die den Fülldruck der Gasseite des Kolbenspeichers und den Systemdruck am Aktuator darstellen, sowie einen Drehzahlsensor aufweisen, der die Drehzahl an der Motor-Pumpeneinheit signalisiert.

Nachstehend ist die Erfindung anhand der Zeichnung im Einzelnen erläutert. Es zeigen:
- Fig. 1: in einem stark schematisch vereinfachten Längsschnitt ein Ausführungsbeispiel eines hydropneumatischen Kolbenspeichers in einer Mehrstufenausführung für den Einsatz bei dem erfindungsgemäßen System;
- Fig. 2: eine Prinzipdarstellung, die den Kolbenspeicher von Fig. 1 in Verbindung mit zugehörigen Systemkomponenten des erfindungsgemäßen Systems zeigt; und
- Fig. 3: den Kolbenspeicher in Verbindung mit einem in Symboldarstellung gezeigten hydraulischen Schaltplan eines Ausführungsbeispiels des erfindungsgemäßen Hybridsystems.

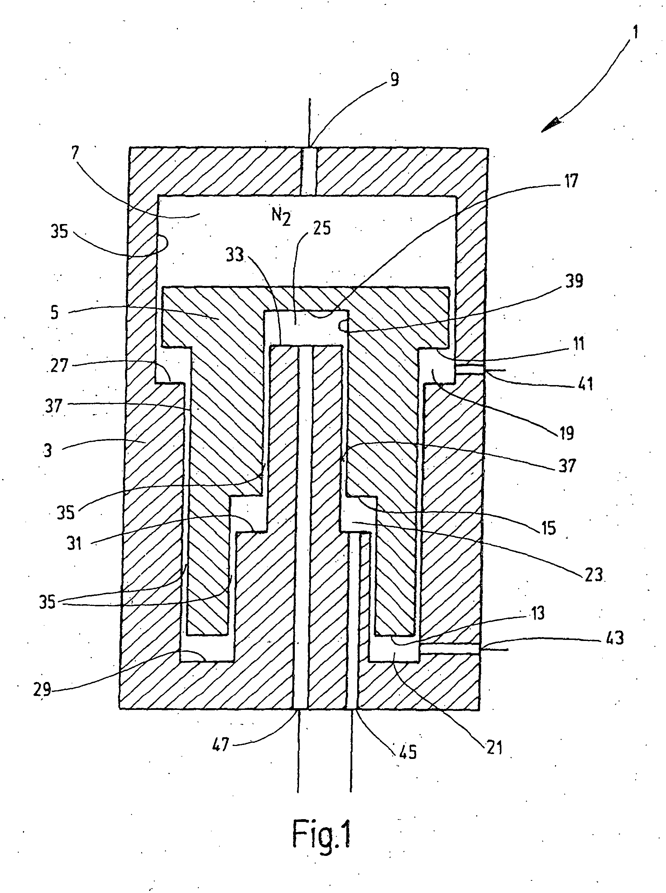

Der in Fig. 1 in schematisch vereinfachter Darstellung gezeigte hydropneumatische Kolbenspeicher 1 weist einen in einem Speichergehäuse 3 axial bewegbar geführten Speicherkolben 5 auf, der im Speichergehäuse 3 eine Gasseite 7, an der sich ein Füllanschluss 9 befindet, von fluidseitigen Druckräumen trennt. Der Speicherkolben 5 ist in der Art eines Stufenkolbens derart gestaltet, dass er in Zusammenwirkung mit entsprechend gestuften Teilen des Speichergehäuses 3 fluidseitige Druckräume 19, 21, 23 und 25 begrenzt, die an unterschiedlich große Wirkflächen an der Fluidseite des Speicherkolbens 5 angrenzen. In Fig. 1 sind diese Wirkflächen, von der größtflächigen bis zur kleinstflächigen, mit 11, 13, 15 und 17 bezeichnet. Dabei sind die Wirkflächen 11, 13 und 15 jeweils durch zur Längsachse konzentrische Kreisringflächen gebildet, die die innerste Wirkfläche 17 in Form einer Kreisfläche umgeben. An die Wirkflächen 11, 13 und 15 angrenzende Druckräume 19, 21 bzw. 23 sind durch Gegenflächen 27 bzw. 29 bzw. 31 des Speichergehäuses 3 sowie durch Zylinderflächen 35 des Zylindergehäuses 3 und Zylinderflächen 37 am Speicherkolben 5 begrenzt.

Der an die Wirkfläche 17 angrenzende Druckraum 25 ist durch eine Gegenfläche 33 des Speichergehäuses 3 sowie eine Zylinderfläche 39 des Speicherkolbens 5 begrenzt.

Für jeden Druckraum 19, 21, 23, 25 ist ein Fluidanschuss 41, 43, 45 bzw. 47 vorgesehen. Wie die Wirkflächen 11, 13, 15 und 17 am Speicherkolben 5 sind die zugeordneten Gegenflächen 27, 29, 31 bzw. 33 am Speichergehäuse 3 in axial zueinander beabstandeten Stufen angeordnet.

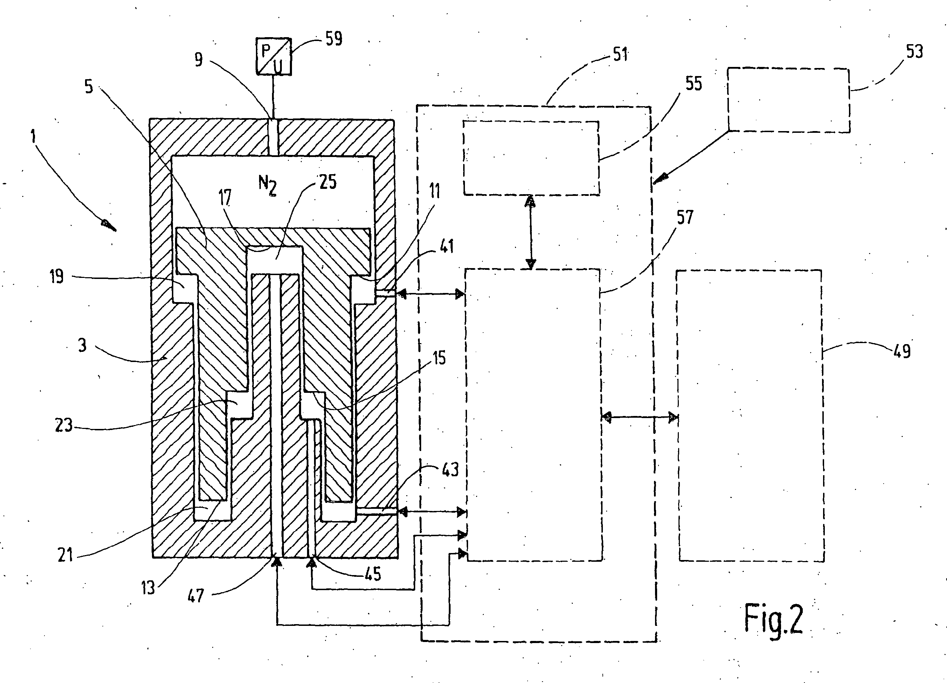

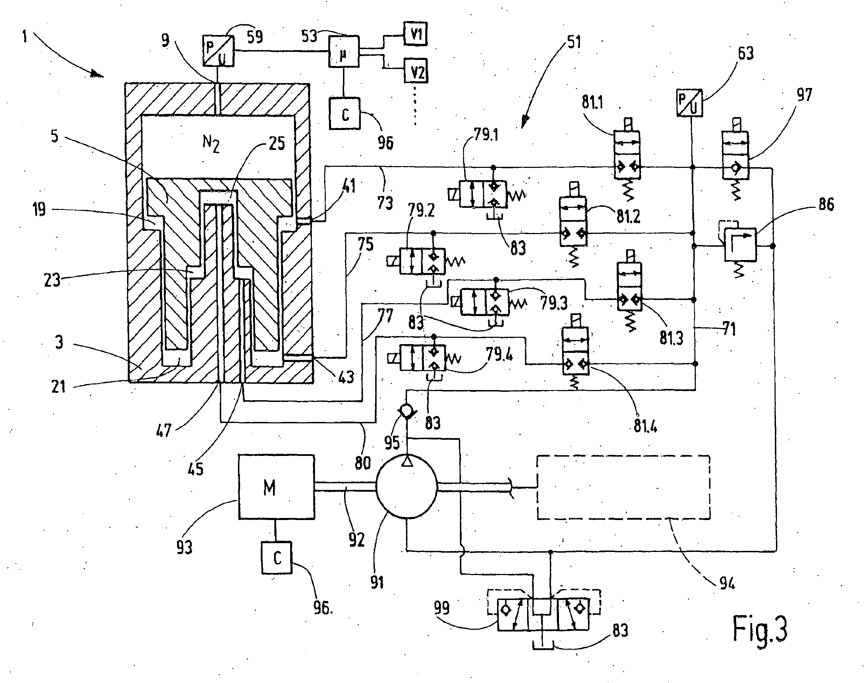

Die Fig. 2 zeigt den Kolbenspeicher 1 in Verbindung mit zugeordneten Systemkomponenten, wobei ein Aktuator 49 in Wirkverbindung mit einer Stellanordnung 51 ist. Der Aktuator 49 weist eine Motor-Pumpeneinheit 91 (Fig. 3) auf, die mit einem Gerät 94 (Fig. 3) gekuppelt ist. Der Stellanordnung 51 ist eine Steuerlogik 53 zugeordnet, die mittels einer Steuer- und Regeleinheit 55 eine Ventilanordnung 57 der Stellanordnung 51 betätigt. Die Ventilanordnung 57 weist, wie anhand der Fig. 3 näher ausgeführt wird, Schaltventile auf, die ausgewählte Fluidverbindungen zwischen Aktuator 49 und den Fluidanschlüssen 41, 43, 45, 47 des Kolbenspeichers 1 herstellen, um wahlweise die Druckräume 19, 21, 23 und 25 für Lade- oder Entladevorgänge zu aktivieren. Hierfür verarbeitet die Steuerlogik 53 Signale, die von Sensoreinrichtungen geliefert sind und die Betriebszustände von Aktuator 49 und Kolbenspeicher 1 darstellen. Von den Sensoreinrichtungen ist in Fig. 2 lediglich ein Drucksensor 59 am Füllanschluss 9 des Kolbenspeichers 1 gezeigt.

Die Fig. 3 zeigt den hydraulischen Schaltplan eines Ausführungsbeispiels des erfindungsgemäßen hydraulischen Hybridsystems, wobei der Aktuator 49 eine Motor-Pumpeneinheit 91 aufweist, deren Pumpenwelle 92 einerseits mit einer Antriebsquelle, beispielsweise einem Verbrennungsmotor 93, und andererseits mit einem rotatorisch antreibbaren Gerät 94 gekuppelt ist. Bei diesem Gerät kann es sich um eine Arbeitshydraulik, einen Fahrantrieb oder dergleichen handeln, d.h. um ein Gerät, das in einem Betriebszustand als Verbraucher hydraulischer Energie und in anderen Betriebszuständen, etwa bei Bremsvorgängen des Fahrantriebs, als Erzeuger hydraulischer Engergie ein entsprechendes Drehmoment an der Pumpenwelle 92 erzeugt. Die Druckseite der Motor-Pumpeneinheit 91 ist über ein Rückschlagventil 95 mit einer den Systemdruck führenden Hauptleitung 71 der Stellanordnung 91 verbunden. Diese weist für die Verbindung zwischen der Hauptleitung 71 und den Fluidanschlüssen 41, 43, 45 und 47 des Kolbenspeichers 1 jeweils eine Verbindungsleitung 73, 75, 77, 80 auf. In jeder der Verbindungsleitungen befindet sich eine von der Steuerlogik 53 betätigbare Ventilgruppe, symbolhaft bezeichnet mit v₁, v₂ usw., wobei jede Ventilgruppe aus zwei schnellschaltenden 2/2-Wege-Ventilen gebildet ist, die mit 79 und 81 bezeichnet und bei den Ventilgruppen v₁ bis v₄ mit dem Index 1 bis 4 gekennzeichnet sind. Über die Wegeventile 81.1 bis 81.4 ist die jeweils zugehörige Verbindungsleitung 73, 75, 77, 80 mit dem zugehörigen Fluidanschluss 41, 43, 45 bzw. 47 des Kolbenspeichers 1 verbindbar oder sperrbar. Über die Wegeventile 79.1 bis 79.4 ist die jeweilige Verbindungsleitung mit dem Tank 83 verbindbar.

Zur Erzeugung der von der Steuerlogik 53 zu verarbeitenden Signale sind am Füllanschluss 9 des Kolbenspeichers 1 ein das gasseitige Druckniveau erkennender Drucksensor 59, an der Hauptleitung 71 ein den Systemdruck erkennender Drucksensor 63 und am Antriebsmotor 93 ein Drehzahlsensor 96 vorgesehen. Anhand dieser Signale entscheidet die Steuerlogik 53, welche der Verbindungsleitungen 73, 75, 77 oder 80 oder welche Kombination dieser Verbindungsleitungen die Verbindung zwischen Hauptleitung 71 und dem jeweils zugeordneten Fluidanschluss 41, 43, 45, 47 am Kolbenspeicher 1 herstellt. Dabei erfolgt die Auswahl danach, welcher der Druckräume 19, 21, 23, 25 oder welche Kombination aus diesen Druckräumen für einen Ladevorgang oder Entladevorgang beim jeweils herrschenden Druckniveau des Systemdruckes (Hauptleitung 71) und des Speichers 1 am besten geeignet ist. Bei Entladevorgängen wird die rückgewonnene Energie über ein Schaltventil 97 von der durch ein Druckbegrenzungsventil 86 abgesicherten Hauptleitung 71 an die Saugseite der Motor-Pumpeneinheit 91 zurückgegeben. Bei Ladevorgängen ist das Schaltventil 97 geschlossen, und eine Verbindungsleitung oder mehrere der Verbindungsleitungen 73, 75, 77, 80 sind über die Wegeventile 81.1 bis 81.4 aktiviert, wobei die jeweils zugeordneten Wegeventile 79.1 bis 79.4 geschlossen sind. Andererseits stellen die Wegeventile 79.1 bis 79.4 bei den jeweils nicht aktivierten Verbindungsleitungen 73, 75, 77, 80 die Verbindung zum Tank 83 her, so dass die angeschlossenen, nicht gewählten Druckräume 19, 21, 23 oder 25 des Speichers 1 bei Entladevorgängen drucklos und bei Ladevorgängen aus dem Tank 83 nachfüllbar sind. Bei wechselnden Systemzuständen kann während Ladevorgängen oder Entladevorgängen die jeweils gewählte Kombination der Wirkflächen 11, 13, 15, 17 gewechselt werden. Um die bei Entladevorgängen überschüssige Fluidmenge des Kreislaufs, die aus dem Speicher 1 kommt, von der nun drucklosen Abströmseite der Motor-Pumpeneinheit 91 zum Tank 83 abzuführen, ist ein inverses Wechselventil 99 vorgesehen. Durch dieses ist auch bei Ladevorgängen die Anströmseite der Motor-Pumpeneinheit 91 für Nachfüllvorgänge mit dem Tank 83 verbindbar. Die Motor-Pumpeneinheit 91 weist eine Konstantpumpe auf.

## Patentansprüche

1. Hydraulisches Hybridsystem für rotatorische Anwendungen, mit einem Aktuator (49, 91) in Form einer Motor-Pumpeneinheit (91), die mit einem rotatorisch arbeitenden Gerät (94), beispielsweise einem Fahrantrieb, gekuppelt ist und bei einem Betriebszustand des Geräts (94) als Verbraucher hydraulischer Energie und in einem anderen Betriebszustand des Geräts (94) als Erzeuger hydraulischer Energie arbeitet, und mit einem Hydrospeicher (1), der beim einen Betriebszustand von der Motor-Pumpeneinheit (91) zur Energiespeicherung aufladbar und beim anderen Betriebszustand für eine Energieabgabe an die Motor-Pumpeneinheit (91) entladbar ist, wobei mindestens ein Hydrospeicher in Form eines verstellbaren hydropneumatischen Kolbenspeichers (1) vorgesehen ist, in dem mehrere Druckräume (19, 21, 23, 25), die an unterschiedlich große Wirkflächen (11, 13, 15, 17) an der Fluidseite des Speicherkolbens (5) angrenzen, gebildet sind, **dadurch gekennzeichnet, dass** eine Stellanordnung (51) vorgesehen ist, die in Abhängigkeit von den jeweiligen auf der Gasseite des Kolbenspeichers (1) und am Aktuator (49, 91) herrschenden Druckniveaus einen ausgewählten Druckraum (19, 21, 23, 25) oder mehrere ausgewählte Druckräume (19, 21, 23, 25) des Kolbenspeichers (1) mit dem Aktuator (49, 91) verbindet, und dass der Stellanordnung (51) eine Steuerlogik (53) zugeordnet ist, die für die Ansteuerung von der Stellanordnung (51) zugehörigen Ventilen (79, 81) die Signale von Sensoreinrichtungen (59, 63, 96) verarbeitet, die das Druckniveau auf der Gasseite des Kolbenspeichers (1) und den jeweiligen Betriebszustand des Aktuators (49, 91) darstellen.

2. Hybridsystem nach Anspruch 1, **dadurch gekennzeichnet, dass** der Speicherkolben (5) zur Bildung unterschiedlicher Wirkflächen (11, 13, 15, 17) als Stufenkolben gestaltet ist und an seiner Fluidseite an Zylinderflächen (35, 37, 39) angrenzende Kolbenteilflächen aufweist und dass das Speichergehäuse (3) korrespondierende, an Zylinderflächen (35, 37) angrenzende Gegenflächen (27, 29, 31, 33) aufweist, die zusammen mit ihnen zugeordneten Kolbenteilflächen jeweils gesonderte Druckräume (19, 21, 23, 25) begrenzen.

3. Hybridsystem nach einem der vorstehenden Ansprüche, **dadurch gekennzeichnet, dass** Wirkflächen (11, 13, 15, 17) am Speicherkolben (5) und Gegenflächen (27, 29, 31, 33) am Speichergehäuse (3) in im axialen Abstand voneinander befindlichen Stufen angeordnet sind.

4. Hybridsystem nach einem der vorstehenden Ansprüche, **dadurch gekennzeichnet, dass** die Stellanordnung (51) Schaltventile (79, 81) aufweist, über die jeweilige Druckräume (19, 21, 23, 25), die für Ladung oder Entladung ausgewählt sind, mit dem Aktuator (49, 91) und die übrigen Druckräume (19, 21, 23, 25) mit dem Tank (83) verbindbar sind.

5. Hybridsystem nach einem der Ansprüche 1 bis 4, **dadurch gekennzeichnet, dass** die Sensoreinrichtungen zumindest Drucksensoren (59, 63), die für die Steuerlogik (53) Signale liefern, die den Fülldruck der Gasseite des Kolbenspeichers (1) und den Systemdruck am Aktuator (49, 91) darstellen, sowie einen die Drehzahl an der Motor-Pumpeneinheit (91) signalisierenden Drehzahlsensor (96) aufweist.

6. Hybridsystem nach einem der vorstehenden Ansprüche, **dadurch gekennzeichnet, dass** die Stellanordnung (51) Wegeventile in Form von Schnellschaltventiten (79, 81) aufweist.

## Claims

1. A hydraulic hybrid system for rotary applications, comprising an actuator (49, 91) in the form of a motor pump unit (91) which is coupled to a rotationally operating device (94), for example a traction drive, and which works as a consumer of hydraulic energy in one operating state of the device (94) and as a producer of hydraulic energy in another operating state of the device (94), and comprising a hydraulic accumulator (1) which can be charged by the motor pump unit (91) for energy storage in the one operating state, and which can be discharged for energy release to the motor pump unit (91) in the other operating state, at least one hydraulic accumulator in the form of an adjustable hydropneumatic piston accumulator (1) being provided in which a number of pressure chambers (19, 21, 23, 25) are formed which are adjacent to active surfaces (11, 13, 15, 17) of different sizes on the fluid side of the accumulator piston (5), **characterised in that** an adjustment assembly (51) is provided which connects a selected pressure chamber (19, 21, 23, 25) or a number of selected pressure chambers (19, 21, 23, 25) of the piston accumulator (1) to the actuator (49, 91) depending on the respective prevailing pressure level on the gas side of the piston accumulator (1) and at the actuator (49, 91), and that a control logic unit (53) is associated with the adjustment assembly (51), which logic unit processes the signals from sensor devices (59, 63, 96) for the control of the valves (79, 81) associated with the adjustment assembly (51), which signals display the pressure level on the gas side of the piston accumulator (1) and the respective operating state of the actuator (49, 91).

2. The hybrid system according to Claim 1, **characterised in that** the accumulator piston (5) is configured as a step piston for the formation of different active surfaces (11, 13, 15, 17) and has partial piston surfaces that are adjacent to cylinder surfaces (35, 37, 39) on the fluid side thereof, and **in that** the accumulator housing (3) has corresponding mating surfaces (27, 29, 31, 33) that are adjacent to cylinder surfaces (35, 37), which mating surfaces, together with the partial piston surfaces associated therewith, each delimit separate pressure chambers (19, 21, 23, 25).

3. The hybrid system according to any of the preceding claims, **characterised in that** the active surfaces (11, 13, 15, 17) on the accumulator piston (5) and mating surfaces (27, 29, 31, 33) on the accumulator housing (3) are disposed in steps that are located an axial distance apart from one another.

4. The hybrid system according to any of the preceding claims, **characterised in that** the adjustment assembly (51) has selector valves (79, 81) by means of which the respective pressure chambers (19, 21, 23, 25), which are selected for charging or discharging, can be connected to the actuator (49, 91), and the remaining pressure chambers (19, 21, 23, 25) can be connected to the tank (83).

5. The hybrid system according to any of Claims 1 to 4, **characterised in that** the sensor devices have at least pressure sensors (59, 63) which supply signals for the control logic unit (53), which signals display the filling pressure on the gas side of the piston accumulator (1) and the system pressure at the actuator (49, 91), and which also have a speed sensor (96) which indicates the rotational speed of the motor pump unit (91).

6. The hybrid system according to any of the preceding claims, **characterised in that** the adjustment assembly (51) has directional valves in the form of fast-switching valves (79, 81).

## Revendications

1. Système hybride hydraulique pour des applications de rotation comprenant un actionneur (49, 91) sous la forme d'un groupe (91) motopompe qui est accouplé à un appareil (94) fonctionnant en rotation, par exemple à un appareil de roulement et travaille dans un état de fonctionnement de l'appareil (94) comme consommateur d'énergie hydraulique et dans un autre état de fonctionnement de l'appareil (94) comme producteur d'énergie hydraulique et comprenant un accumulateur (1) hydraulique qui, dans un état de fonctionnement du groupe (91) motopompe, peut être chargé pour emmagasiner de l'énergie et, dans l'autre état de fonctionnement, peut être déchargé pour céder de l'énergie au groupe (91) motopompe, dans lequel au moins un accumulateur hydraulique est prévu sous la forme d'un accumulateur (1) à piston hydropneumatique réglable, dans lequel sont formés plusieurs espaces (19, 21, 23, 25) de pression qui sont voisins de surfaces (11, 13, 15, 17) actives de dimension différente du côté du fluide du piston (5) de l'accumulateur, **caractérisé en ce qu'**il est prévu un agencement (51) de réglage qui, en fonction des niveaux de pression respectifs régnant du côté du gaz de l'accumulateur (1) à piston et sur l'actionneur (49, 91), met un espace (19, 21, 23, 25) de pression sélectionné ou plusieurs espaces (19, 21, 23, 25) de pression sélectionnés de l'accumulateur (1) à piston en communication avec l'actionneur (49, 91) et **en ce qu'**au dispositif (51) de réglage est associée une logique (53) de commande qui, pour la commande de vannes (79, 80) associées au dispositif (51) de réglage, traite les signaux de dispositifs (59, 63, 96) de capteurs, lesquels représentent le niveau de pression du côté du gaz de l'accumulateur (1) à piston et l'état de fonctionnement respectif de l'actionneur (49, 91).

2. Système hybride suivant la revendication 1, **caractérisé en ce que** le piston (5) de l'accumulateur est conformé pour former des surfaces (11, 13, 15, 17) actives différentes en piston à gradin et a, sur son côté de fluide, des surfaces partielles de piston voisines de surfaces (35, 37, 39) de cylindre et **en ce que** l'enveloppe (3) de l'accumulateur a des contre-surfaces (27, 29, 31, 33) correspondantes, voisines des surfaces (35, 37) de cylindre, qui délimitent ensemble avec des surfaces partielles de piston, qui leur sont associées respectivement, des espaces (19, 21, 23, 25) de pression particuliers.

3. Système hybride suivant l'une des revendications précédentes, **caractérisé en ce que** des surfaces (11, 13, 15, 17) actives sont disposées sur le piston (5) de l'accumulateur et des contre-surfaces (27, 29, 31, 33) sur l'enveloppe (1) de l'accumulateur en des gradins se trouvant à une distance axiale les uns des autres.

4. Système hybride suivant l'une des revendications précédentes, **caractérisé en ce que** le dispositif (51) de réglage a des soupapes (79, 81) de commande, par lesquelles des espaces (19, 21, 23, 25) de pression respectifs, qui sont sélectionnés pour la charge ou pour la décharge, peuvent communiquer avec l'actionneur (49, 91) et les autres espaces (19, 21, 23, 25) de pression avec le réservoir (83).

5. Système hybride suivant l'une des revendications 1 à 4, **caractérisé en ce que** les dispositifs de capteurs représentent au moins des capteurs (59, 63) de pression, qui fournissent, pour la logique (53) de commande, des signaux, lesquels représentent la pression de système à l'actionneur (49, 91), ainsi qu'un capteur (96) de vitesse de rotation signalant la vitesse de rotation sur le groupe (91) motopompe.

6. Système hybride suivant l'une des revendications précédentes, **caractérisé en ce que** le dispositif (51) de réglage a des soupapes à plusieurs voies, sous la forme de soupapes (79, 81) de commande à action rapide.
